# FASCICULE DE BREVET EUROPEEN

(11) **EP 1 263 538 B1**
(45) Date de publication et mention de la délivrance du brevet: **20.07.2005**
(21) Numéro de dépôt: 01942585.9
(22) Date de dépôt: 17.01.2001
(51) Int. Cl.: B08B 7/00, B23K 26/40

(54) **PROCEDE D'ENLEVEMENT LOCAL D'UN REVETEMENT APPLIQUE SUR UN SUBSTRAT TRANSLUCIDE OU TRANSPARENT**
VERFAHREN ZUM LOKALEN ENTFERNEN EINER BESCHICHTUNG AUF EINEM TRANSLUZENTEN ODER TRANSPARENTEN SUBSTRAT
METHOD FOR LOCALLY REMOVING A COAT APPLIED ON A TRANSLUCENT OR TRANSPARENT SUBSTRATE

(30) Priorité: 20.01.2000 BE 200000037
(43) Date de publication de la demande: 11.12.2002
(73) Titulaire: Wallonia Space Logistics Societe Anonyme, 4031 Angleur (BE)
(72) Inventeur: KUPISIEWICZ, Axel, B-4630 Soumagne (BE)
(74) Mandataire: Donné, Eddy
(86) Numéro de dépôt international: PCT/BE2001/000010
(87) Numéro de publication internationale: WO 2001/053011

(56) Documents cités:
- DE-A- 19 715 702
- FR-A- 2 760 986
- US-A- 5 235 154
- US-A- 5 958 268
- US-A- 5 986 234

## Description

L'invention concerne un procédé d'enlèvement local d'un revêtement, appelé aussi "coating", qui comprend au moins une couche métallique et/ou au moins une couche en oxyde de métal, appliqué sur un substrat translucide ou transparent en verre naturel ou synthétique ou en plastique transparent.

Par "coating", il faut comprendre tout revêtement composé d'une ou de plusieurs couches qui confèrent au substrat des propriétés optiques, electromagnétiques ou thermiques particulières.

De tels revêtements sont souvent appliqués sur du verre, par exemple pour des pare-brises, souvent en une ou plusieurs couches avec une épaisseur tellement petite qu'elles sont translucides ou transparentes.

Ces revêtements sont déposés le plus souvent sous vide et sur l'entièreté de la surface du matériau. Or, pour de nombreuses applications, le matériau doit être mis à nu dans des endroits précis, par exemple sur le contour.

Cet enlèvement local est nécessaire, par exemple pour retrouver les propriétés originales du matériau, en vue d'une meilleure adhésion si le verre doit être collé, en vue d'une isolation électrique si le revêtement est conducteur, en vue de retrouver la transparence initiale en cas de revêtement non-transparent etc.

A l'heure actuelle, l'enlèvement local de ce revêtement est réalisé soit par des méthodes chimiques soit par des méthodes mécaniques.

Ces techniques entraînent cependant une pollution chimique, peuvent agresser la surface ou même endommager le matériau lui-même.

On peut éviter cet enlèvement du revêtement en appliquant le revêtement uniquement aux endroits voulus par une technique de masquage.

Cette technique n'est cependant pas toujours possible, entre autres dans le cas de masques de forme complexe, ou présentant des pièces discontinues et incluses.

De plus, les transitions entre les parties revêtues et les parties non-revêtues sont parfois de mauvaise qualité.

Le coût des masques est souvent prohibitif, surtout s'il faut les remplacer à chaque modification de localisation des parties non-revêtues.

L'invention a pour but de procurer un procédé d'enlèvement local d'un revêtement, appliqué sur un substrat translucide ou transparent, qui évite ces inconvénients et qui est donc économique, ne risque pas d'endommager le substrat, permet d'obtenir une grande précision de localisation avec une transition entre les parties revêtues et non-revêtues d' excellente qualité (liseré même inférieur à 25 micromètres), et permet de redonner au substrat ses propriétés physiques originales là où le revêtement est enlevé.

Conformément à l'invention, ce but est atteint par un procédé selon la revendication 1.

Il est déjà connu d'utiliser un laser pour l'enlèvement sélectif de couches au cours du procédé de déposition dans l'industrie des semi-conducteurs et pour l'enlèvement d'oxydes sur les surfaces métalliques.

Dans ces cas un laser à gaz est utilisé. Un tel type de laser n'est pas utilisable pour les matériaux transparents qui exigent, si l'on veut retrouver leurs propriétés physiques initiales, une absence de diffusion de composés des couches à l'intérieur du matériau, et ne supportent que de faibles augmentations thermiques.

US-U-5.235.154 par exemple concerne la fabrication de circuits intégrés et de semi-conducteurs et décrit un procédé permettant de réparer des coupures dans des interconnections qui consistent en deux couches métalliques, déposées sur une couche organique isolante, par exemple en polyimide, couvrant elle-même le substrat isolant, par exemple en verre. Les parties à remplacer des couches métalliques sont successivment éliminées par vaporisation à l'aide d'un laser pulsé, par exemple du type YAG, après quoi la partie enlevée est rebouchée par une déposition chimique sous forme de vapeur. Uniquement des petites surfaces sont traitées par laser et la préservation des qualités optiques du substrat n'est pas garantie, l'ensemble n'étant d'ailleurs pas transparent ou translucide.

Le procédé selon l'invention permet de préserver les propriétés optiques du substrat translucide ou transparent. En plus, il peut être appliqué à un ensemble substrat-revêtement qui peut posséder une transmission lumineuse de plus de 80%.

US-A-5.958.268 décrit un procédé d'ablation sélective de matériaux indésirés, par exemple l'ablation d'oxydes d'un substrat en métal, l'ablation de silice d'un substrat de quartz ou l'ablation de peinture d'un substrat en métal. L'ablation est réalisée par l'effet combiné d'un gaz inerte propulsé sur la surface à traiter et d'un faisceau laser de photons énergétiques.

Des photons suffisamment énergétiques, c'est-à-dire avec des énergies comprises entre 7 et 22 eV, sont requis ce qui limite le choix du laser. Un laser UV est préféré, par exemple un laser à gaz du type KrF dont la longueur d'onde est de 248 nm et qui permet une énergie photonique de 5eV.

Le procédé susdit ne permet pas d'enlever sélectivement un revêtement d'un substrat en verre ou en plastique transparent relativement épais tel qu'un pare-brise, puisqu'il conduirait à un échauffement du substrat et à la création de microfissures ou qu'il serait inefficace dû à l'absorption des photons énergétiques.

Selon l'invention, un laser à corps solide avec des longueurs d'onde entre 10 micromètres et 360 nanomètres, par exemple un laser Nd:YAG est utilisé dont les photons ne font que 1,167 eV ou 2,32 eV quand il est doublé. La probabilité de casser une liaison chimique avec ce type de laser produisant des photons peu énergétiques est infime.

DE-A-197 15 702 décrit un procédé d'ablation d'une ou plusieurs couches au moyen d'un laser autoréglé. Selon ce procédé, l'ablation est réalisée par un laser ayant une longueur d'onde telle que le faisceau laser est absorbé par le revêtement dans une mesure telle que le niveau d'ablation du matériau de ce revêtement soit dépassé, tandis que ce niveau n'est pas atteint dans le substrat. La longueur d'onde optimale est choisie en fonction de l'absorption du revêtement et du substrat, absorption dont la relation avec l'efficacité de l'ablation était bien connue. Afin de pouvoir mieux produire cette longueur d'onde optimale, un laser avec un oscillateur paramétrique optique (OPO) est utilisé. En raison du fait que les alignements des éléments sont très complexes et que la stabilité de fonctionnement requiert un environnement peu agressif, des lasers avec un OPO sont pratiquement inutilisables en milieu extérieur à un laboratoire.

Le procédé susdit étant basé sur l'absorption de la longueur d'onde du faisceau par le revêtement, il est nécessaire que l'absorption de la longueur d'onde du faisceau soit importante et sensiblement différente de celle du substrat.

Or ceci n'est pas nécessaire selon l'invention, l'absorption du revêtement aux longueurs d'onde utilisées peut être faible, même inférieure à 10%, et l'absorption du substrat transparent ou translucide peut différer peu de celle du revêtement. Une simple observation des propriétés spectrométriques du revêtement et du substrat ne permet pas d'arriver aux exigences de rendement et de qualité requise pour par exemple l'ablation de la couche ou des couches pour diminuer le rayonnement thermique émis ou transmis par un pare-brise, un vitrage d'automobile ou une vitre d'un bâtiment.

Selon l'invention, un faisceau dont l'impulsion est inférieure à 30 ns et dont la longueur d'onde est de préférence comprise entre 1200 nanomètres et 400 nanomètres, est dirigé sur le revêtement.

Le faisceau du laser pulsé peut être envoyé à travers un système d'imagerie optique et/ou d'un diaphragme pour améliorer la qualité de la transition entre les surfaces couvertes et celles non-couvertes.

Le faisceau du laser pulsé est d'une manière optimale dirigé sur le revêtement à travers le substrat.

Pour plus de clarté, quelques exemples de réalisation d'un procédé d'enlèvement local de revêtement d'un substrat translucide ou transparent, selon l'invention, sont décrits ci-après à titre illustratif et non-restrictif, référence étant faite aux dessins annexés dans lesquels :
la figure 1 représente d'une manière schématique un substrat en verre au cours de l'enlèvement local de son revêtement en appliquant le procédé selon l'invention;
la figure 2 est une vue avant d'un substrat dont une partie du revêtement a été enlevée selon l'invention;
les figures 3 et 4 sont des vues schématiques semblables à celles de la figure 1, mais se rapportant à deux autres formes de réalisation du procédé selon l'invention;
la figure 5 représente en coupe un substrat et son revêtement auquel le procédé selon l'invention est applicable;
la figure 6 représente en coupe le substrat et son revêtement pendant l'application du procédé, à échelle plus grande ;
la figure 7 représente schématiquement un dispositif utilisable pour appliquer le procédé selon l'invention, mais se rapportant à une autre forme de réalisation de ce procédé;
la figure 8 représente schématiquement un dispositif utilisable pour appliquer le procédé selon l'invention, mais se rapportant à encore une autre forme de réalisation de ce procédé.

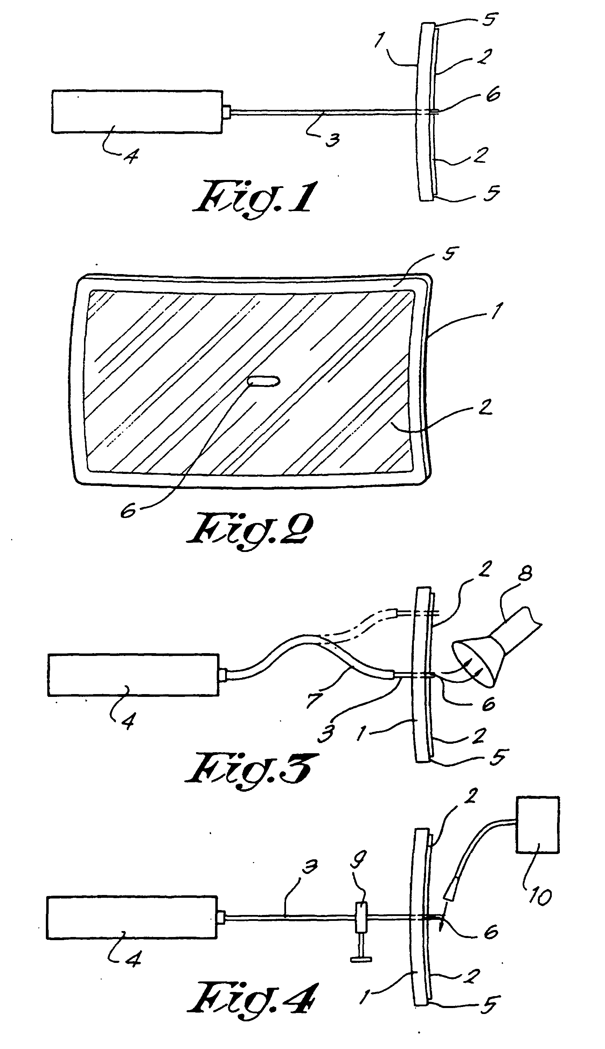

La figure 1 représente schématiquement un substrat 1 en verre, dans l'exemple donné un verre de pare-brise d'une voiture, qui a été revêtu sur toute sa surface par un revêtement 2 qui est localement enlevé selon l'invention à l'aide d'un faisceau laser 3 pulsé qui est dirigé sur le revêtement 2 par un laser 4 pulsé à corps solide.

L'absorption totale du substrat 1 et du revêtement 2 ensemble dans l'exemple donné est inférieure à 30% pour les longueurs d'onde du laser 4, ce qui veut dire que le revêtement 2 est aussi peu absorbant et donc transparent ou translucide.

Le revêtement 2 comporte plusieurs couches dont une au moins est une couche métallique assurant au revêtement 2 une conductivité électrique.

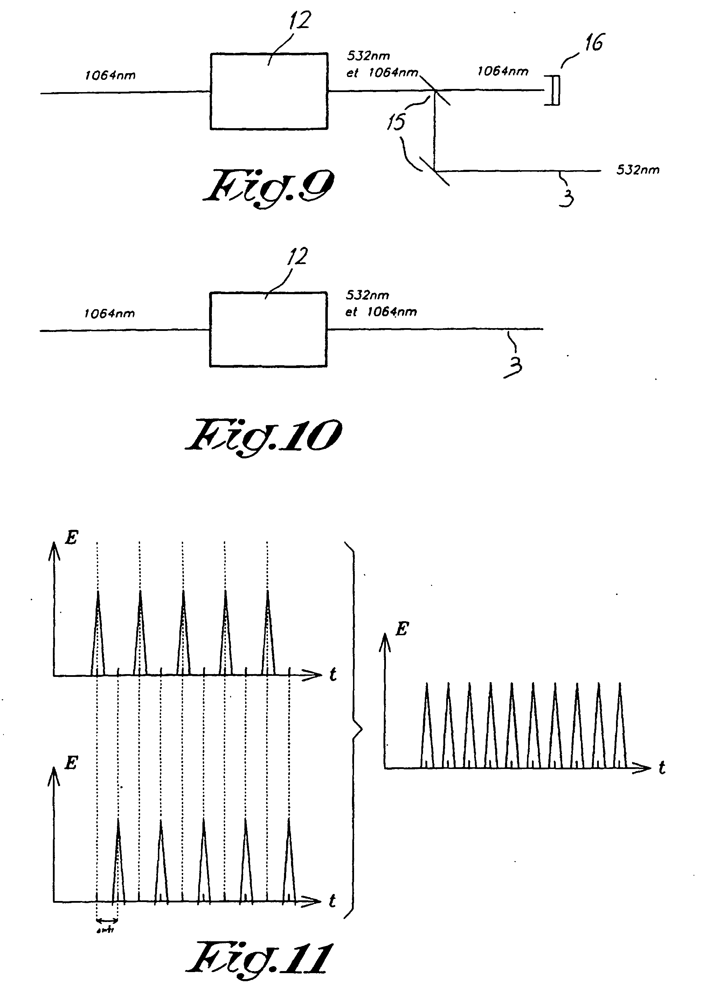

Un autre exemple est représenté en détail à la figure 5. Le revêtement 2 comprend un nombre de couches superposées de quelques nanomètres ou micromètres d'épaisseur et donc transparents, c'est-à-dire au moins une première couche d'oxyde de zinc 21, une couche d'argent 22, un deuxième et une troisième couche d'oxyde de zinc 23 et 24, une deuxième couche d'argent 25 et une quatrième couche d'oxyde de zinc 26. Ce revêtement permet de diminuer le rayonnement thermique transmis par le substrat de verre 1.

Dans l'exemple donné, le revêtement 2 doit être enlevé d'une zone 5 au contour du substrat 1 afin d'en faciliter le collage, et localement sur une zone 6 au milieu pour obtenir une zone non-conductrice, tout en assurant une transmission visuelle conforme aux spécifications recherchées, mais il est évident que d'autres configurations des parties du revêtement à enlever sont possibles.

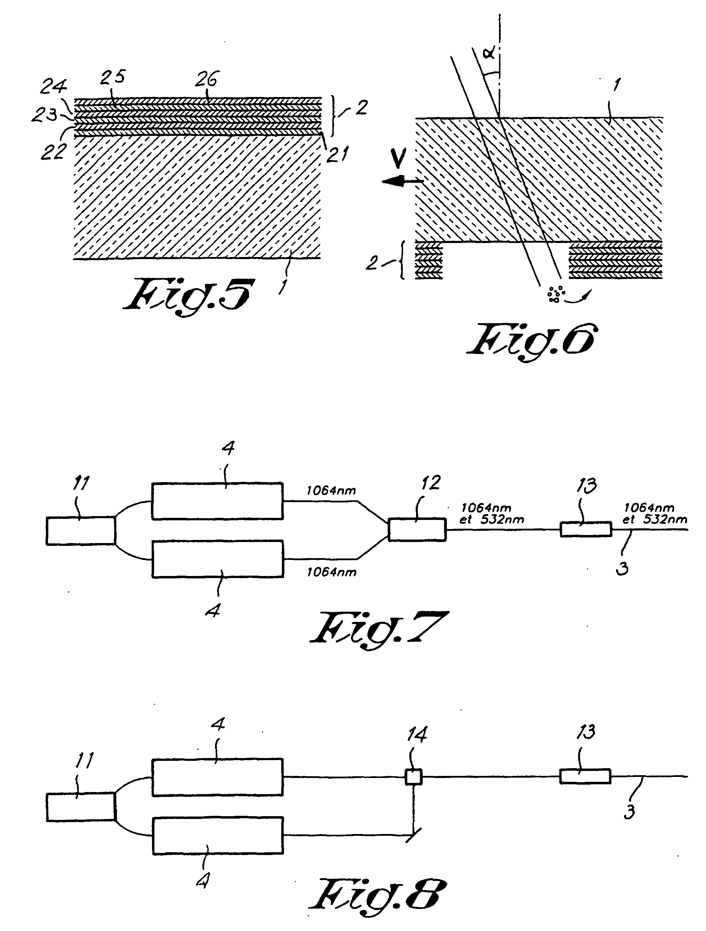

A la figure 2 le substrat 1 est représenté après enlèvement local du revêtement 2 dans les zones 5 et 6.

Le laser 4 qui est utilisé est un laser à corps solide, par exemple un laser du type: YAG, de préférence un laser Nd:YAG dont les impulsions sont brèves, plus spécialement d'une durée inférieure à 30 ns, et de manière optimale inférieure à 10 ns.

Dans des variantes d'autres types de lasers pulsés sont possibles, comme par exemple un laser 4 du type Nd :Glass; par exemple le Nd :YLF.

L'énergie d'impulsion et la longueur d'onde sont optimalisées en fonction de la nature du revêtement 2 et du substrat 1.

L'utilisation de longueurs d'onde du faisceau laser 3 dans l'infrarouge proche et le visible, c'est à dire des longueurs d'onde entre 10 micromètres et 360 nanomètres, et de préférence entre 1200 nanomètres et 400 nanomètres, permet une transmission efficace de l'énergie du laser 4 à travers le substrat 1 en verre, ce qui permet d'éviter les échauffements susceptibles de provoquer des diffusions indésirées de la matière du revêtement 2 dans le substrat 1 ou des microfissures dans le substrat 1 dues aux contraintes thermiques.

Puisque la surface d'impact du faisceau 3 est beaucoup plus petit que les zones 5 et 6, il faut donner un mouvement relatif du faisceau 3 par rapport au substrat 1, ce mouvement étant de préférence commandé par un microprocesseur programmable.

Ceci peut être réalisé, soit en laissant le laser 4 à un endroit fixe et en faisant bouger le substrat 1, soit en laissant le substrat 1 fixe et en déplaçant le laser 4, soit encore en déplaçant uniquement le faisceau 3, par exemple par un système de miroirs ou par une fibre optique 7 comme représenté à la figure 3.

Le mouvement du substrat 1 peut être réalisé à l'aide d'une table de translation ou de rotation, sur laquelle le substrat revêtu est posé et qui est mis en mouvement, contrôlé par un microprocesseur, par rapport au faisceau laser.

La vitesse d'enlèvement peut être augmentée en envoyant les pulsations du laser 4 à travers le substrat 1. Ceci n'est pas dû à une augmentation de température du substrat l, puisque celui-ci n'absorbe que très peu d'énergie lumineuse du laser 4, mais est en partie dû au fait que les particules du revêtement 2 libérées par le faisceau, sont propulsées dans l'espace et non pas vers le substrat 1. Le vecteur vitesse de l'éjection des composés, même gazeux, se trouve dans le même sens que le faisceau incident.

L'angle d'incidence α par rapport à la normale du faisceau est situé entre 5° et 35° de sorte que les résidus propulsés par le faisceau soient éjectés du côté non encore décapé par le balayage laser, tel que représenté en détail à la figure 6, ce qui permet d'éviter au maximum la diffusion d'ions métalliques indésirables dans le substrat 1. Dans cette figure 6, la direction du mouvement relatif du substrat 1 par rapport au faisceau 3 est indiquée par la flèche V.

La forme de réalisation de procédé qui se rapporte à la figure 3, diffère de la forme de réalisation décrite ci-avant non seulement par l'utilisation d'une fibre optique 7 pour guider le faisceau 3, mais également par le fait que les particules libérées par le faisceau 3 sont aspirées par un dispositif aspirant 8. Ceci peut augmenter la vitesse d'enlèvement et d'éviter au maximum la diffusion d'ions métalliques indésirables dans le substrat 1.

La qualité de l'enlèvement et de l'interface entre les zones 5 et 6 non-revêtues et les parties revêtues peut être améliorée en utilisant un système d'imagerie optique et/ou un diaphragme.

La figure 4 se rapporte à une forme de réalisation du procédé dans lequel un diaphragme 9 est utilisé, ce diaphragme étant positionné devant le laser 4. Ceci est dû au fait que le diaphragme 9 coupe les bords du profil spatial du faisceau laser rendant ceux-ci plus francs.

En outre, un gaz, par exemple inerte ou de l'air comprimé produit par un compresseur 10, est dirigé sur l'endroit d'impact du faisceau 3 sur le revêtement 2. Ceci peut augmenter la vitesse d'enlèvement.

Le laser 4 est un laser à corps solide pompé par lampes flash ou pompé par diode laser. Dans une variante le laser 4 à corps solide peut être remplacé par une ou plusieurs diodes lasers pulsées pour autant que la puissance en soit suffisante.

Le laser 4 peut aussi être couplé à un générateur d'harmonique, par exemple un doubleur de fréquence 12 de sorte que la longeur d'onde du faisceau 3 soit la moitié de la longueur d'onde du laser 4, permettant par là d'augmenter la qualité de l'enlèvement. Le générateur d'harmonique est alors utilisé de façon normale, c'est-à-dire en générant un maximum d'harmonique et en filtrant la longueur d'onde fondamentale au moyen de deux miroirs dichroïques 15 et d'un piège à lumière 16, tel que représenté à la figure 9.

Ce générateur d'harmonique peut aussi être utilisé en modifiant le "phase-matching" du cristal et en éliminant les miroirs dichroïques (figure 10), afin d'utiliser simultanément les harmoniques et la fondamentale avec des densités d'énergie différentes, permettant ainsi d'utiliser au mieux l'énergie du laser, et donc d'augmenter les vitesses d'enlèvement d'un facteur 2 à 5 et la qualité du décapage. Par exemple, le "phase-matching" du doubleur 12 peut être volontairement déréglé pour obtenir une proportion de 60% de proche infrarouge et 40% de visible dans le faisceau de sortie 3, permettant d'augmenter les vitesses d'enlèvement.

Le faisceau 3 peut également être modifié par un système d'imagerie optique.

Le système optique coupe les bords du faisceau d'énergie intermédiaire, évitant ainsi les combustions partielles ou homogénisant le faisceau dans la zône d'application.
D'autres procédés d'amélioration du profil du faisceau, comme l'utilisation d'un système d'imagerie ou d'un homogéniseur, permettent eux aussi de diminuer les effets négatifs des particules résiduelles en empêchant des combustions partielles ou des réactions indésirées des particules présentes dans le plasma.

La partie de l'énergie du faisceau 3 non absorbée par le revêtement est soit transmise ou réfléchie par celui-ci. Ces faisceaux transmis et réfléchi peuvent être récupérés par un système de miroirs et renvoyés sur le revêtement à enlever. Ce système optique complémentaire permet d'augmenter la vitesse d'enlèvement d'un facteur 2.

Au lieu d'un laser 4 unique, deux lasers 4 identiques de fréquence f et de longueur d'onde λ, par exemple 1064 nm pour des Nd:YAG, sont utilisés dont un des lasers 4 est asservi à l'autre par un boîtier de synchronisation 11 afin que le tir de ce dernier laser 4 soit décalé temporellement d'un facteur f/2. Les deux faisceaux sont recombinés sur un doubleur 12 permettant de générer un faisceau en sortie comprenant deux longueurs d'onde (par exemple 532 nm et la fondamentale à 1064 nm), suivi d'un système d'imagerie 13, tel que représenté schématiquement à la figure 7, ou sur un polariseur 14, tel que représenté schématiquement à la figure 8.

Le système émettra alors un faisceau 3 avec une fréquence virtuelle de 2f. La figure 11 montre les impulsions de deux lasers 4 avec une fréquence f, le deuxième laser 4 étant asservi à l'autre, et les impulsions du laser virtuel de fréquence 2f obtenu après recombinaison des faisceaux des lasers 4 sur un doubleur 12 ou un polariseur. Le gain de ce système porte aussi bien sur le volume occupé par ce système que sur la qualité du faisceau utile pour le décapage. En effet, l'augmentation de fréquence de ce système n'implique pas une dégradation du profil spatial du faisceau 3, contrairement à l'augmentation de fréquence d'un laser seul à énergie impulsionnelle identique. Suivant quelques modifications, le système pourrait aussi utiliser n lasers identiques de fréquence f afin d'obtenir un faisceau de sortie 3 d'une fréquence virtuelle de nf.

Dans toutes les formes de réalisation décrites ci-devant, le procédé selon l'invention peut comprendre à la fin, c'est-à-dire après le décapage local, une cuisson du substrat 1 et du revêtement 2 non enlevé à plus de 100°C, de préférence à plus de 600°C.

Cette cuisson permet aux derniers résidus, laissés sur le substrat 1 par décapage proprement dit, de s'évaporer ou de se diffuser de manière homogène dans le substrat 1. Un autre effet est l'homogénisation des traces en surface dues aux particules excitées du plasma, par exemple des ions métalliques.

Plus la durée et la température du cycle de cuisson seront longues, plus les particules vont migrer et diffuser dans toute l'épaisseur du substrat 1.

Une telle cuisson est d'ailleurs déjà appliquée dans la fabrication des pare-brise, pour bomber le verre, de sorte que dans cette application elle ne constitue pas une phase supplémentaire.

Grâce à la cuisson, le procédé peut être plus rapide, puisque les contraintes sur des concentrations trop importantes de particules résiduelles diffusées en surface sont diminuées par la diffusion de ces mêmes particules dans toute l'épaisseur du substrat 1, conduisant à une concentration finale très faible, les particules devenant alors invisibles.

La majorité des éléments du revêtement 2 multicouches est éliminée. L'évaporation ou la diffusion de ces éléments pendant le décapage et la cuisson permet au substrat de retrouver sa transparence initiale.

La cuisson permet un rendement 5 à 10 fois supérieur au procédé sans cuisson.

Le verre du substrat 1 peut aussi bien être du verre naturel, comme un verre d'un pare-brise, d'un vitrage automobile ou d'un vitrage pour un bâtiment, que du verre synthétique ou du plastique transparent, tel que le PET.

Après son décapage selon l'invention, une telle couche de plastique peut être placée en sandwich entre deux feuilles de verre ou entre une feuille de verre et une feuille de plastique, par exemple du PVB. Le décapage peut aussi être réalisé lorsque la feuille de PET est placée directement sur une couche de verre ou de PVB.

Le substrat 1 peut être le verre d'une bouteille, par exemple une bouteille de parfum ou d'alcool, le revêtement 2 pouvant être décoratif, l'enlèvement local de ce revêtement ayant pour but de donner du relief ou de permettre des dessins particuliers à des fins techniques ou commerciales.

Dans toutes ces formes de réalisation, les parties du revêtement 2 sont enlevées avec précision, de manière simple et rapide, sans endommager le substrat 1.

Des liserés de grande netteté sont possibles, même d'une largeur inférieure à 0,01 mm sont possibles.

Le procédé permet une grande flexibilité dans la création de dessins. L'enlèvement sélectif se fait, par exemple, sur un contour pour éviter la propagation de la corrosion à l'intérieur d'un pare-brise, ou sur des surfaces locales afin d'y placer des capteurs, par exemple des capteurs de pluie, des codes barres pour identifier le pare-brise, ou encore des zones décapées nécessaires pour les télépéages.

Le dessin peut aussi être réalisé par l'intermédiaire d'un masque sur lequel est gravé le dessin à réaliser. Ce masque, balayé par le faisceau laser 3, peut être placé entre le laser 4 et le substrat 1 afin d'éviter tout encrassement du masque par les résidus projetés.

La qualité, le rendement et la flexibilité du procédé susdit sont dû aux interactions complexes entre les phénomènes photothermique, photoaccoustique et création d'un plasma par le décapage, résultant du choix du laser 4, des longueurs d'onde, de la durée des pulses et d'autres mesures évitant la dégradation du substrat 1 par des résidus excités. Les photons réagissent avec le revêtement 2 et pas avec le substrat 1.

La combinaison des phénomènes susdits permet la sublimation du revêtement 2 ou l'éjection de ce revêtement 2 en des particules fines.

Là où le revêtement 2 est enlevé, le substrat 1 possède à nouveau ses propriétés physiques originales, c'est-à-dire qu'il est translucide ou transparent comme avant d'être recouvert et qu'il est non-conductif, même si le revêtement 2 l'est.

Le procédé est de ce fait particulièrement utile pour enlever localement un revêtement sur des substrats 1 qui doivent garder leurs qualités optiques.

Le procédé permet de décaper localement un revêtement 2 faiblement absorbant aux longueurs d'onde utilisées, sur un substrat 1 également faiblement absorbant aux longueurs d'onde susdites, l'absorption de l'ensemble substrat-revêtement étant inférieure à 30%.

Ceci n'empêche pas que le procédé puisse être appliqué pour enlever du substrat 1 un revêtement 2 opaque, par exemple noir (black print), par exemple pour enlever la marque d'impression d'un pare-brise.

Le procédé décrit ci-devant permet un gain d'un facteur 10 à 100 par rapport à une utilisation sans précautions particulières d'un laser. Les coûts d'une installation d'enlèvement local d'un revêtement appliquant le procédé selon l'invention sont comparables ou inférieurs à ceux d'une technologie classique mécanique ou chimique. Avec un laser 4 d'une puissance moyenne d'à peine 50W (par exemple 1 Joule cadencé à 50 Hz) permet d'enlever 10 m²/h d'un revêtement 2 multicouche pour diminuer le rayonnement thermique, dite «coating low-e».

## Revendications

1. Procédé d'enlèvement local d'un revêtement (2), qui comprend au moins une couche métallique et/ou au moins une couche en oxyde de métal, appliqué sur un substrat (1) translucide ou transparent en verre naturel ou synthétique ou en plastique transparent, selon lequel à l'aide d'un laser (4) pulsé à corps solide ou d'au moins une diode laser pulsée, un faisceau (3) laser pulsé dont l'impulsion est inférieure à 30 ns et dont la (ou les) longueur(s) d'onde est (sont) comprise(s) entre 10 micromètres et 360 nanomètres, est dirigé sur le revêtement (2), aux endroits où celui-ci doit être enlevé, les longueurs d'onde utilisées étant telles que l'absorption de l'ensemble du substrat (1) et du revêtement (2) soit inférieure à 30%.

2. Procédé selon la revendication 1, **caractérisé en ce qu'**un faisceau (3) dont l'impulsion est inférieure à 10 ns est dirigé sur le revêtement (2).

3. Procédé selon -la revendication 1 ou 2, **caractérisé en ce qu'**un faisceau 3 est dirigé sur le revêtement dont la (ou les) longueur(s) d'onde est (sont) comprise(s) entre 1200 nanomètres et 400 nanomètres.

4. Procédé selon l'une quelconque des revendications précédentes, **caractérisé en ce que** l'angle d'incidence α du faisceau (3) par rapport à la normale est situé entre 5° et 35°, le sens de balayage par le faisceau étant tel que les résidus expulsés sous l'angle α se déposent sur la partie encore revêtue.

5. Procédé selon l'une quelconque des revendications précédentes, **caractérisé en ce que** le faisceau (3) du laser pulsé (4) est envoyé sur le revêtement (2) à travers un système d'imagerie optique.

6. Procédé selon l'une quelconque des revendications précédentes, **caractérisé en ce que** le faisceau (3) du laser pulsé (4) est envoyé à travers un diaphragme (9) sur le revêtement (2).

7. Procédé selon l'une quelconque des revendications précédentes, **caractérisé en ce que** le faisceau (3) du laser pulsé (4) est dirigé sur le revêtement (2) à travers le substrat (1).

8. Procédé selon l'une quelconque des revendications précédentes, **caractérisé en ce qu'**un laser (4) du type YAG, par exemple un laser Nd:YAG, ou du type Nd :Glass, comme par exemple un laser Nd:YLF, pompé par lampes flash ou pompé par diodes est utilisé.

9. Procédé selon l'une quelconque des revendications précédentes, **caractérisé en ce que** le laser (4) est complété par un générateur d'harmoniques, par exemple un doubleur de fréquence.

10. Procédé selon l'une quelconque des revendications précédentes, **caractérisé en ce que** le laser (4) est complété par un générateur d'harmoniques et un système optique permettant d'utiliser simultanément les harmoniques et le fondamental avec des densités d'énergies différentes.

11. Procédé selon l'une quelconque des revendications 1 à 8, **caractérisé en ce que** deux lasers (4) identiques de même fréquence sont utilisés, dont l'un est asservi à l'autre par un boîtier de synchronisation (11) afin que le tir de ce dernier laser (4) soit décalé temporairement d'un facteur ½f, les deux faisceaux laser étant alors combinés sur un doubleur de fréquence (12) ou sur un polariseur (14).

12. Procédé selon l'une quelconque des revendications précédentes, **caractérisé en ce que** le revêtement (2) est enlevé localement d'un substrat (1) constitué par un verre d'un pare-brise ou vitrage de voiture, un verre de bâtiment ou le verre d'une bouteille.

13. Procédé selon l'une quelconque des revendications précédentes, **caractérisé en ce que** le faisceau (3) est conduit par au moins une fibre optique (7).

14. Procédé selon l'une quelconque des revendications précédentes, **caractérisé en ce qu'**un gaz sous pression est dirigé sur l'endroit d'impact du faisceau (3) sur le revêtement (2).

15. Procédé selon l'une quelconque des revendications précédentes, **caractérisé en ce qu'**une aspiration est effectuée à l'endroit de l'impact du faisceau (3) sur le revêtement (2).

16. Procédé selon l'une quelconque des revendications précédentes, **caractérisé en ce qu'**on donne un mouvement relatif au substrat (1) afin de déterminer la forme du revêtement qui est à enlever.

17. Procédé selon l'une quelconque des revendications précédentes, **caractérisé en ce qu'**en enlevant localement le revêtement par le faisceau laser (3), les propriétés physiques originales du substrat (1) d'avant le revêtement sont rétablies.

18. Procédé selon l'une quelconque des revendications précédentes, **caractérisé en ce qu'**on enlève localement le revêtement (2) de manière à ce que le substrat (1) retrouve ses propriétés optiques initiales.

19. Procédé selon l'une quelconque des revendications précédentes, **caractérisé en ce qu'**on enlève localement le revêtement (2) de telle manière que la transition entre les parties couvertes et celles non-couvertes du revêtement (2) est nette, les liserés étant même inférieurs à 10 micromètres.

20. Procédé selon l'une quelconque des revendications précédentes, **caractérisé en ce que** l'énergie du faisceau (3) non absorbée par le revêtement (2) est récupérée par un système de miroirs et renvoyés sur le revêtement (2) à enlever.

21. Procédé selon l'une quelconque des revendications précédentes, **caractérisé en ce qu'**il comprend à la fin une cuisson du substrat (1) avec le reste du revêtement (2) à plus de 100°C, de préférence à plus de 600°C.

## Patentansprüche

1. Verfahren zum lokalen Entfernen einer Beschichtung (2), umfassend wenigstens eine Metallschicht und/oder wenigstens eine Metalloxidschicht, angebracht auf einem durchsichtigen oder transparenten Substrat (1) aus natürlichem oder synthetischem Glas oder aus transparentem Kunststoff, gemäß welchem Verfahren mit Hilfe eines Lasers (4), der mit festen Stößen pulsiert, oder mit wenigstens einer pulsierenden Laserdiode ein pulsierender Laserstrahl (3), dessen Impuls unter 30 ns liegt und dessen Wellenlänge(n) zwischen 10 Mikrometer und 360 Nanometer beträgt (betragen), auf die Beschichtung (2) gerichtet wird, an den Stellen , wo sie entfernt werden muss, wobei die verwendeten Wellenlängen so beschaffen sind, dass die Absorption des gesamten Substrats (1) und der Beschichtung (2) unter 30 % ist.

2. Verfahren nach Anspruch 1, **dadurch gekennzeichnet, dass** ein Strahl (3), dessen Impuls unter 10 ns beträgt, auf die Beschichtung (2) gerichtet wird.

3. Verfahren nach Anspruch 1 oder 2, **dadurch gekennzeichnet, dass** ein Strahl (3) auf die Beschichtung gerichtet wird, dessen Wellenlänge(n) zwischen 1200 Nanometer und 400 Nanometer beträgt (betragen).

4. Verfahren nach einem der vorhergehenden Ansprüche, **dadurch gekennzeichnet, dass** der Einfallwinkel α des Strahls (3) in Bezug auf die Normale zwischen 5° und 35° liegt, wobei die Abtastrichtung durch den Strahl so ist, dass, Rückstände, die unter dem Winkel α ausgestoßen werden, sich auf dem noch beschichteten Teil absetzen.

5. Verfahren nach einem der vorhergehenden Ansprüche, **dadurch gekennzeichnet, dass** der Strahl (3) des pulsierenden Lasers (4) durch ein optisches Bildsystem auf die Beschichtung (2) gelenkt wird.

6. Verfahren nach einem der vorhergehenden Ansprüche, **dadurch gekennzeichnet, dass** der Strahl (3) des pulsierenden Lasers (4) durch ein Diaphragma (9) auf die Beschichtung (2) gelenkt wird.

7. Verfahren nach einem der vorhergehenden Ansprüche, **dadurch gekennzeichnet, dass** der Strahl (3) des pulsierenden Lasers (4) durch das Substrat (1) auf die Beschichtung gerichtet wird.

8. Verfahren nach einem der vorhergehenden Ansprüche, **dadurch gekennzeichnet, dass** ein Laser (4) vom Typ YAG, z.B. ein Laser Nd:YAG, oder vom Typ Nd :Glass , z.B. ein Laser Nd:YLF, gepumpt durch Blitzlampen oder gepumpt durch Dioden, verwendet wird.

9. Verfahren nach einem der vorhergehenden Ansprüche, **dadurch gekennzeichnet, dass** der Laser (4) , ergänzt wird durch einen Oberwellenerzeuger, z.B. einen Frequenzverdoppler.

10. Verfahren nach einem der vorhergehenden Ansprüche, **dadurch gekennzeichnet, dass** der Laser (4) ergänzt wird durch einen Oberwellenerzeuger und ein optisches System, das die gleichzeitige Verwendung der Oberwellen und der Grundschwingung mit verschiedenen Energiedichten erlaubt.

11. Verfahren nach einem der Ansprüche 1 bis 8, **dadurch gekennzeichnet, dass** zwei identische Laser (4) derselben Frequenz verwendet werden, von denen einer dem anderen untergeordnet ist durch ein Synchrongetriebe (11), damit der Beschuss des letzteren Lasers (4) zeitlich um einen Faktor von ½ f versetzt ist, wobei die beiden Laser dann auf einem Ferquenzverdoppler (12) oder einem Polarisator (14) kombiniert sind.

12. Verfahren nach einem der vorhergehenden Ansprüche, **dadurch gekennzeichnet, dass** die Beschichtung (2) lokal von einem Substrat (1) entfernt wird, aus Glas einer Windschutzscheibe oder Scheibe eines Autos, ein Gebäudeglas oder Flaschenglas besteht.

13. Verfahren nach einem der vorhergehenden Ansprüche, **dadurch gekennzeichnet, dass** der Strahl (3) durch wenigstens eine Faseroptik (7) geleitet wird.

14. Verfahren nach einem der vorhergehenden Ansprüche, **dadurch gekennzeichnet, dass** ein Gas unter Druck auf die Aufprallstelle des Strahls (3) auf der Beschichtung (2) geleitet wird.

15. Verfahren nach einem der vorhergehenden Ansprüche, **dadurch gekennzeichnet, dass** an der Aufprallstelle des Strahls (3) auf der Beschichtung (2) eine Absaugung erfolgt.

16. Verfahren nach einem der vorhergehenden Ansprüche, **dadurch gekennzeichnet, dass** eine Bewegung in Bezug auf das Substrat (1) gegeben wird, um die Form der zu entfernenden Beschichtung zu bestimmen.

17. Verfahren nach einem der vorhergehenden Ansprüche, **dadurch gekennzeichnet, dass** beim lokalen Entfernen der Beschichtung durch den Laser (3) die ursprünglichen physischen Eigenschaften des Substrats (2) vor dem Entfernen wiederhergestellt werden.

18. Verfahren nach einem der vorhergehenden Ansprüche, **dadurch gekennzeichnet, dass** die Beschichtung (2) lokal so entfernt wird, dass das Substrat (1) wieder seine anfänglichen optischen Eigenschaften erlangt.

19. Verfahren nach einem der vorhergehenden Ansprüche, **dadurch gekennzeichnet, dass** die Beschichtung (2) lokal so entfernt wird, dass der Übergang zwischen den bedeckten Teilen und den unbedeckten Teilen der Beschichtung (2) sauber ist, wobei die Ränder sogar deutlich unter 10 Mikrometer sind.

20. Verfahren nach einem der vorhergehenden Ansprüche, **dadurch gekennzeichnet, dass** die Energie des Strahls (3), die nicht durch die Beschichtung (2) absorbiert wird, durch ein Spiegelsystem wiedergewönnen und zurück auf die Beschichtung (2) geleitet wird.

21. Verfahren nach einem der vorhergehenden Ansprüche, **dadurch gekennzeichnet, dass** es am Ende ein Backen des Substrats (11) mit dem Rest der Beschichtung (2) bei mehr als 100°C, vorzugsweise mehr als 600°C umfasst.

## Claims

1. Method for locally removing a coating (2), which comprises at least a metal layer and/or at least a layer of metal oxide, provided on a translucent or transparent substrate (1) made of natural or synthetic glass or of transparent plastic, whereby, by means of a pulsated solid-state laser (4) or at least a pulsated laser diode, a pulsated laser beam (3) whose pulse is lower than 30 ns and whose wavelength(s) is (are) situated between 10 micrometers and 360 nanometres, is directed onto the coating (2), in those places where it has to be removed, whereby the used wavelengths are such that the absorption of the substrate (1) and of the coating (2) as a whole is inferior to 30%.

2. Method according to claim 1, **characterised in that** a beam (3) whose pulse is lower than 10 ns is directed onto the coating (2).

3. Method according to claim 1 or 2, **characterised in that** a beam (3) is directed onto the coating whose wavelength(s) is (are) situated between 1200 nanometres and 400 nanometres.

4. Method according to any of the preceding claims, **characterised in that** the angle of incidence α of the beam (3) in relation to the normal is situated between 5° and 35°, whereby the scanning direction of the beam is such that the ejected residues at the angle α precipitate on the part which is still coated.

5. Method according to any of the preceding claims, **characterised in that** the beam (3) of the pulsated laser (4) is transmitted onto the coating (2) through an optical imaging system.

6. Method according to any of the preceding claims, **characterised in that** the beam (3) of the pulsated laser (4) is transmitted onto the coating (2) via a diaphragm (9).

7. Method according to any of the preceding claims, **characterised in that** the beam (3) of the pulsated laser (4) is directed onto the coating (2) through the substrate (1).

8. Method according to any of the preceding claims, **characterised in that** a laser (4) of the YAG type, for example a Nd:YAG laser, or of the Nd:Glass type, such as for example a Nd:YLF laser, pumped by flash lamps or pumped by diodes, is used.

9. Method according to any of the preceding claims, **characterised in that** the laser (4) is completed by a generator of harmonics, for example a frequency doubling device.

10. Method according to any of the preceding claims, **characterised in that** the laser (4) is completed by a generator of harmonics and an optical system which makes it possible to simultaneously use the harmonics and the fundamental with different energy densities.

11. Method according to any of the preceding claims 1 to 8, **characterised in that** two identical lasers (4) having the same frequency are used, one of which is controlled by the other by means of a synchronisation device (11) in order to shift the burst of the latter laser (4) in time by a factor 1/2f, whereby the two laser beams are then combined in a frequency doubling device (12) or in a polarizer (14).

12. Method according to any of the preceding claims, **characterised in that** the coating (2) is locally removed from a substrate (1) formed of the glass of a windscreen or car window, a window in a building or the glass of a bottle.

13. Method according to any of the preceding claims, **characterised in that** the beam (3) is guided by at least one optical fibre (7).

14. Method according to any of the preceding claims, **characterised in that** a pressure gas is directed onto the place of impact of the beam (3) on the coating (2).

15. Method according to any of the preceding claims, **characterised in that** a suction takes place on the place of impact of the beam (3) on the coating (2).

16. Method according to any of the preceding claims, **characterised in that** the substrate (1) is subjected to a relative movement in order to determine the shape of the coating to be removed.

17. Method according to any of the preceding claims, **characterised in that**, by locally removing the coating with the laser beam (3), the original physical properties which the substrate (1) had before being coated are restored.

18. Method according to any of the preceding claims, **characterised in that** the coating (2) is locally removed in such a manner that the initial optical properties of the substrate (1) are restored.

19. Method according to any of the preceding claims, **characterised in that** the coating (2) is locally removed in such a manner that the transition between the covered parts and the non-covered parts of the coating (2) is clear, whereby the borders are even smaller than 10 micrometers.

20. Method according to any of the preceding claims, **characterised in that** the energy of the beam (3) which has not been absorbed by the coating (2) is recovered by a mirror system and is sent back onto the coating (2) to be removed.

21. Method according to any of the preceding claims, **characterised in that**, in the end, the substrate (1) is heated together with the rest of the coating (2) at a temperature of more than 100°C, preferably more than 600°C.
